# FASCICULE DE BREVET EUROPEEN

(11) **EP 2 300 227 B1**
(45) Date de publication et mention de la délivrance du brevet: **12.08.2015**
(21) Numéro de dépôt: 09757621.9
(22) Date de dépôt: 05.06.2009
(51) Int. Cl.: B32B 37/10, B32B 37/00

(54) **MACHINE DE CONTRECOLLAGE D'UN SUPPORT, NOTAMMENT DE PLASTIFICATION D'UN DOCUMENT, PAR LAMINATION**
MASCHINE ZUM AUFKASCHIEREN EINES SUBSTRATS, INSBESONDERE ZUR DOKUMENTPLASTIFIZIERUNG DURCH LAMINIEREN
MACHINE FOR PASTING A SUBSTRATE, PARTICULARLY FOR DOCUMENT PLASTICIZING, BY LAMINATION

(30) Priorité: 06.06.2008 FR 0853753
(43) Date de publication de la demande: 30.03.2011
(73) Titulaire: Kala, 35410 Nouvoitou (FR)
(72) Inventeur: BAUDOUIN, Sylvie, F-35150 Pire Sur Seiche (FR); BOUCHARD, Laurent, F-35140 Mezieres Sur Couesnon (FR); MARILLIER, Patrick, F-35230 SAINT ERBLON (FR)
(74) Mandataire: Regimbeau
(86) Numéro de dépôt international: PCT/EP2009/056955
(87) Numéro de publication internationale: WO 2009/147240

(56) Documents cités:
- EP-A- 0 979 730
- EP-A- 1 700 690
- DE-B- 1 204 061
- GB-A- 1 420 139
- US-A- 5 975 178
- US-A1- 2002 074 090

## Description

La présente invention est relative à une machine de contrecollage d'un support, notamment de plastification d'un document, par lamination.

Une telle machine permet d'appliquer et/ou de contrecoller une feuille protectrice formant revêtement, plastifiée ou non, sur tout type de support rigide ou souple.

Des exemples de matériaux utilisés pour de tels supports comprennent le chlorure de polyvinyle, le carton, le bois, l'aluminium, le verre, etc.

Par l'expression "contrecollage", on englobe non seulement l'opération consistant à déposer sur une face un revêtement de protection, par exemple transparent, mais également l'encapsulation du support, c'est-à-dire l'emprisonnement de ses deux faces par deux feuilles distinctes.

Une telle machine est notamment utilisée par les professionnels des arts graphiques ou par des sociétés utilisatrices d'outils publicitaires, notamment pour protéger des supports graphiques de grandes dimensions, tels que des posters ou des panneaux publicitaires.

Une telle machine comprend, de manière connue, un châssis entre les deux montants duquel s'étendent deux rouleaux généralement horizontaux et rotatifs de lamination, à savoir un rouleau inférieur moteur et un rouleau supérieur suiveur, la rotation de ce dernier étant assuré par contact et/ou compression contre le rouleau inférieur ou le support.

Ce rouleau supérieur est équipé de moyens autorisant son déplacement en translation selon une direction verticale, pour régler, à la demande, son écartement vis-à-vis du rouleau inférieur.

Lorsque l'on souhaite contrecoller un support avec une telle machine, on règle préalablement l'écartement entre les deux rouleaux précités, de manière à ce qu'il soit légèrement supérieur à l'épaisseur du support et on introduit l'extrémité amont de ce dernier entre les rouleaux.

Le rouleau supérieur est alors rabaissé en direction du rouleau inférieur, en ayant préalablement introduit l'extrémité de la (ou des) feuilles(s) de revêtement, jusqu'à obtention de la pression requise. La rotation du rouleau inférieur est alors déclenchée, de manière à mettre en oeuvre le contrecollage par lamination.

Une telle machine donne généralement satisfaction. Toutefois, dans certaines situations critiques, la pression appliquée sur le support plan par le rouleau supérieur n'est pas uniforme, car ce dernier ne s'étend pas strictement parallèlement au rouleau inférieur.

La conséquence de ceci est que le contrecollage du support plan n'est pas parfaitement réalisé.

Par ailleurs, un autre problème lié à ce genre de machines découle du contrecollage de support de petite largeur.

En effet, lorsque cette petite largeur est très notablement inférieure à celle des rouleaux, il est nécessaire de l'introduire en position centrale pour que la pression appliquée sur lui soit uniforme et que le contrecollage se fasse dans les meilleures conditions.

Si ce même support est introduit à une extrémité des rouleaux, un défaut de parallélisme entre les deux rouleaux survient, et conduit à un contrecollage imparfait.

D'autres machines, de type différent, sont décrites dans les documents US-A-2002/074090, EP-A-0979730 et US-A-5975178.

Ainsi, US-A-2002/074090 décrit une machine conforme au préambule de la revendication 1 annexée.

Quant au US-A-5975178, il a trait à un appareil dont les deux rouleaux peuvent être déplacés verticalement à l'aide "d'ajusteurs".

La présente invention a pour but de pallier les inconvénients plus haut.

Elle se rapporte donc à une machine qui comprend un châssis entre les deux montants duquel s'étendent deux rouleaux généralement horizontaux et rotatifs de lamination, à savoir un rouleau inférieur moteur et un rouleau supérieur suiveur, la rotation de ce dernier étant assuré par contact et/ou compression contre le rouleau inférieur ou le support.

Selon l'invention, les moyens de déplacement comprennent une paire de moteurs, chacun d'entre eux étant solidaire, notamment via des éléments de transmission de mouvement, d'une extrémité dudit rouleau, et chacun des moteurs fonctionnant indépendamment l'un de l'autre. De plus, la machine comporte des moyens d'enregistrement de la position relative de chacune des extrémités dudit rouleau supérieur, lorsque celui est mis en simple contact contre le rouleau inférieur et que les pressions entre les rouleaux au voisinage de leurs extrémités respectives sont équilibrées.

Ainsi, grâce à cette "duplication" de moteur, il va être possible de piloter chaque extrémité du rouleau supérieur indépendamment l'une de l'autre, de manière à assurer une compression uniforme du support à laminer.

Par ailleurs, selon d'autres caractéristiques avantageuses et non limitatives de cette machine :
- chaque extrémité du rouleau est associée à un moyen d'enregistrement de position tel qu'un potentiomètre apte à mesurer une valeur x₁, respectivement x₂, caractéristique de la position de cette extrémité lors d'un test de compression ;
- elle comprend des moyens électroniques aptes à mesurer la valeur Δx, caractéristique de la différence entre x₁ et x₂, à l'enregistrer et à restituer cette différence d'écartement entre les rouleaux, quelques soient l'épaisseur, la largeur et le positionnement dudit document introduit entre eux ;
- lesdits moteurs sont électriques ;
- chacun desdits moteurs possède un axe de sortie rotatif en forme de vis sans fin, avec laquelle ladite extrémité coopère ;
- elle comporte un seul et même organe pour la mise en route, respectivement l'arrêt desdits moteurs ;
- lesdits moteurs sont logés dans les montants, à l'intérieur desquels sont guidées les extrémités de l'arbre dudit rouleau supérieur ;
- chaque montant comporte un capot amovible autorisant l'accès auxdits moteurs.

D'autres caractéristiques et avantages de la présente invention apparaîtront à la lecture de la description détaillée qui va suivre d'un mode de réalisation préférentiel.

Cette description sera faite en référence aux dessins annexés dans lesquels :
- la figure 1 est une vue en perspective d'une machine conforme à l'invention ;
- la figure 2 est une vue de face de ses deux rouleaux de lamination, ainsi que d'une partie des montants dans lesquels sont reçues ses extrémités ;
- la figure 3 est une vue de face des deux rouleaux précités, ainsi que des moyens qui permettent d'assurer la translation du rouleau supérieur ;
- la figure 4 est une vue de côté des moyens assurant la translation du rouleau supérieur ;
- la figure 5 est une vue analogue à la précédente, mais en perspective ;
- la figure 6 est une vue de face de la partie réceptacle d'un des montants du châssis de la machine ;
- la figure 7 est une vue en perspective correspondant sensiblement à la figure 2.

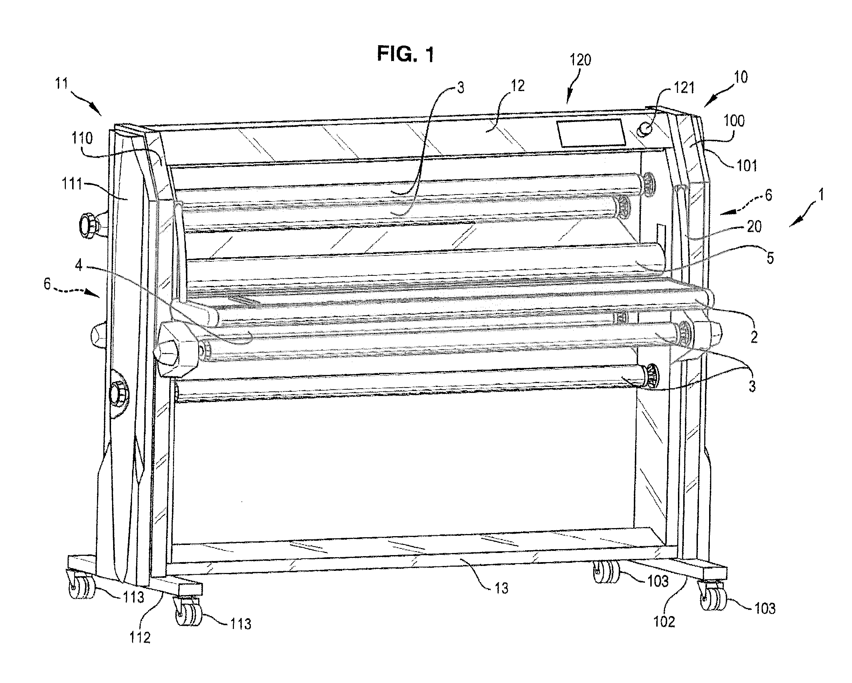

La machine de la figure 1 présente une physionomie généralement connue en soi.

Elle comprend un châssis 1 métallique qui est essentiellement constitué de deux châssis 10 et 11, reliés par deux traverses supérieure 12 et inférieure 13.

Les montants 10 et 11 sont l'image l'un de l'autre dans un miroir.

Ils s'étendent verticalement à l'opposé l'un de l'autre et comprennent une partie creuse formant réceptacle 100, respectivement 110 tournée vers l'extérieur et un capot 101, respectivement 111, ce capot étant amovible et permettant de donner accès à l'intérieur du réceptacle précité.

Les réceptacles 100 et 110 sont réunis en leur partie supérieure par une traverse 12 formant poutre rigidificatrice, qui accueille notamment un panneau de commande 120 et un bouton de marche/arrêt 121 de la machine.

Bien entendu, l'espace interne creux de cette traverse peut être mis à profit pour y loger d'autres équipements nécessaires au fonctionnement de la machine.

Les deux réceptacles 100 et 110 sont par ailleurs réunis par une traverse basse 13 qui concourt également à une parfaite rigidité de l'ensemble.

Les montants 10 et 11 reposent tous les deux sur un socle allongé 102, respectivement 112, qui supporte des roulettes 103, respectivement 113, permettant un déplacement aisé de la machine, en toutes circonstances.

Cette machine est bien entendu équipée de moyens d'alimentation en électricité, ceux-ci n'étant pas représentés ici, dans un simple souci de clarté de la figure.

De manière également généralement connue, cette machine est équipée de deux rouleaux de lamination 4 et 5 sur lesquels on reviendra plus loin dans la description.

Elle comporte également une tablette 2 qui est positionnée sensiblement à l'interface des deux rouleaux 4 et 5 et qui permet d'y déposer un support plan, tel qu'un poster, que l'on souhaite contrecoller par lamination entre les deux rouleaux.

Des bras 20 permettent éventuellement de relever cette tablette.

Par ailleurs, cette machine est pourvue de deux paires de d'axes additionnels 3. Une première paire est disposée au-dessus du rouleau 5 tandis qu'une seconde paire est disposée en-dessous du rouleau 4.

Ces axes sont prévus pour la mise en place et le dévidage d'un revêtement, par exemple sous la forme d'une matière plastique adhésivée, destinée à venir recouvrir la face supérieure, respectivement la face inférieure, du support plan à contrecoller.

Bien entendu, il est possible de n'utiliser qu'une seule de ces paires d'axes 3.

Les rouleaux 4 et 5 précités sont de type généralement connu.

Ils présentent tous les deux un arbre 40, respectivement 50 en métal, ainsi qu'un revêtement tubulaire 41, respectivement 51, par exemple en silicone ou en élastomère (EPDM notamment).

Dans la mesure où de tels rouleaux sont destinés à fonctionner à froid ou à chaud, on utilisera, en fonction des cas, l'une ou l'autre de ces matières.

Par ailleurs, ces rouleaux sont bien entendu pourvus de moyens de conduction de la chaleur, lorsque ceci est requis.

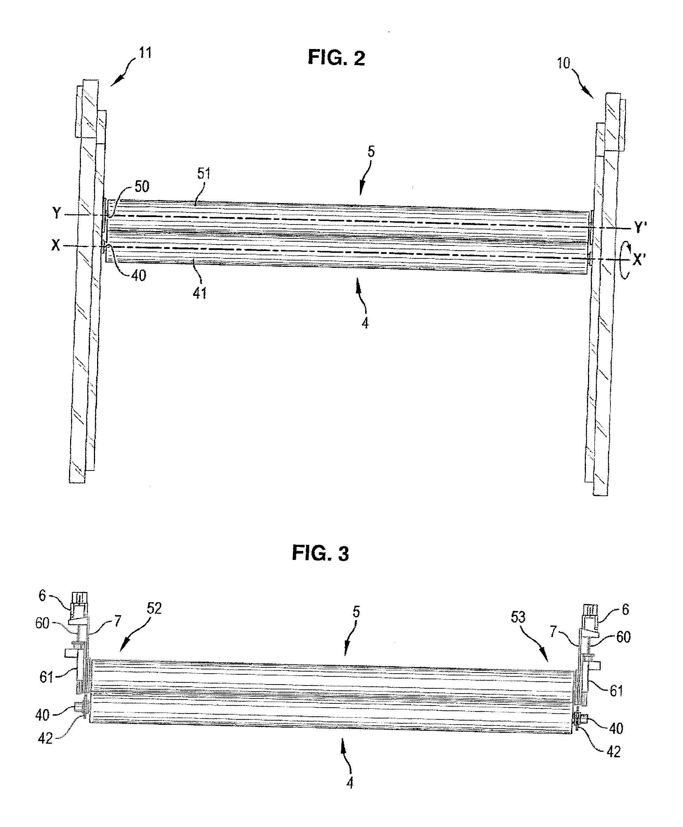

Comme montré particulièrement sur la figure 2, les extrémités des arbres 40 et 50 sont guidées à l'intérieur des réceptacles 100 et 110 des montants 10 et 11. Ces deux rouleaux s'étendent selon des axes XX' et YY' parallèles.

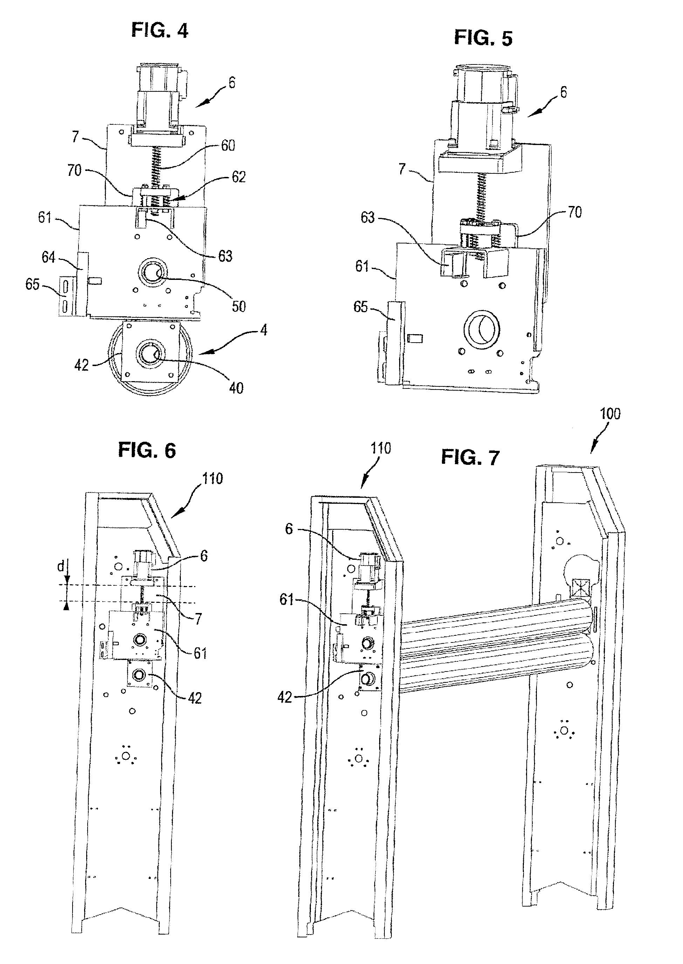

De manière connue en soi, le rouleau inférieur 4, dont on distingue le palier de guidage 42 fixé au châssis, notamment aux figures 3 et 7, est mu en rotation par un moteur non représenté, par exemple électrique, qui lui assure une vitesse de déplacement réglable en fonction des besoins, comprise entre quelques centimètres par minute à quelques mètres par minute.

Le rouleau supérieur 5 a, quant à lui, les extrémités de son arbre 50 guidées à l'intérieur d'une ouverture formée dans une tôle d'élévation 61 qui est liée, notamment par vis, au palier dudit rouleau.

Par ailleurs, chaque montant 10 et 11 du châssis 1 est pourvu d'une tôle 7 d'orientation verticale, au sommet de laquelle est fixé un moteur 6, d'axe également vertical.

L'arbre de sortie 60 de ce moteur est constitué d'une vis sans fin qui est liée, via une liaison par écrou, à la tôle d'élévation 61 précitée.

La tôle 61 translate verticalement sur la plaque 7 associée, elle-même fixé au réceptacle 100, respectivement 110.

Par ailleurs, la plaque 7 est pourvue d'une ouverture 70 qui autorise le passage de l'axe 50 du rouleau 5 lorsque celui-ci est déplacé verticalement par le moteur 6.

A la face inférieure de la liaison vis/écrou 62 de la vis sans fin 60 est positionné un commutateur 63 dont on expliquera plus loin la fonction.

De plus, la tôle d'élévation 61 est porteuse d'un potentiomètre linéaire 65 lié à son support 64, qui est apte à mesurer et enregistrer un potentiel caractéristique de la position relative de l'extrémité associée du rouleau 5 par rapport au rouleau 4.

Le potentiomètre peut être remplacé par tout autre moyen analogue permettant d'enregistrer une position. Il s'agit par exemple de codeurs incrémentaux.

Grâce à l'invention, il va donc être possible de faire fonctionner les moteurs 6 indépendamment l'un de l'autre pour déplacer, également indépendamment l'une de l'autre, les extrémités 52 et 53 du rouleau supérieur 5.

Toutefois, et de préférence, la machine comporte un seul et même organe pour la mise en route et l'arrêt de ces moteurs, ceci afin de faciliter l'emploi de la machine par l'utilisateur.

La présence de ces deux moteurs à fonctionnement indépendant va permettre de réaliser des réglages de calibrage de la machine.

A cet effet, celle-ci comporte des moyens électroniques non représentés qui permettent d'enregistrer la position relative de chacune des extrémités 52 et 53 du rouleau supérieur 5 lorsque celui-ci est mis en simple contact contre le rouleau inférieur 4 et que les pressions entre les deux rouleaux au voisinage de leurs extrémités sont équilibrées.

Cette phase d'équilibrage de pression est réalisée avec un capteur portable de type connu (par exemple celui de la Société TEKSCAN utilisant un capteur de marque "flexiforce").

Lorsque l'équilibrage de pression est réglé, alors on déclenche le commutateur précité 63 qui va permettre l'enregistrement de la position occupée.

Dans un mode de réalisation préférentiel, c'est le potentiomètre associé à l'extrémité droite du rouleau qui enregistre le point zéro et le retranscrit, sous la forme d'une indication en millimètres, sur le panneau de commande de la machine.

Ainsi, une phase de réglage systématique de la compression des rouleaux est supprimée.

L'opérateur peut ainsi régler l'écartement des rouleaux en fonction de l'épaisseur du support utilisé (affichage de 10 pour un support de 10 mm par exemple).

Par ailleurs, les potentiomètres 65 sont aptes à mesurer la valeur x₁, respectivement x₂, caractéristique de la position de chacune extrémité du rouleau 5 lors d'un test de compression.

Ce test est effectué pour atteindre une compression maximale (réglable) entre les deux rouleaux.

Lors de cette calibration, le positionnement relatif de contact de chaque extrémité du rouleau supérieur 5 sur le rouleau inférieur 4 est enregistré à l'aide des deux potentiomètres linéaires 65 précités.

Un équipement électronique adéquat enregistre ces valeurs calcule l'écart entre celles-ci, appelé aux, et est apte à restituer cette différence d'écartement entre les rouleaux 4 et 5, quelque soit l'épaisseur, la largeur, et le positionnement d'un support à contrecoller qui serait inséré entre eux.

Les vitesses de déplacement et contraintes mécaniques pouvant être différentes entre les deux moteurs 6, si l'on place par exemple le rouleau supérieur 5 à 10mm du rouleau inférieur 4, le positionnement de celui-ci sera géré en fonction de l'écart enregistré par l'équipement électronique, les moteurs étant, dans le fonctionnement normal de la machine, commandé en même temps et par une même touche sur le clavier de commande.

Cette valeur est conservée lorsque l'on place un support d'un certain nombre de millimètres en compression entre les deux rouleaux.

Par ailleurs, si ce support n'est pas centré entre la gauche et la droite de la machine, les efforts de compression seront différents entre le moteur gauche et le moteur droit.

Toutefois, un réalignement automatique de parallélisme se fait de la même façon en fonction des écarts des deux potentiomètres.

## Revendications

1. Machine de contrecollage d'un support, notamment de plastification d'un document, par lamination, qui comprend un châssis (1) entre les deux montants (10, 11) duquel s'étendent deux rouleaux (4, 5) généralement horizontaux et rotatifs de lamination, à savoir un rouleau inférieur moteur (4), et un rouleau supérieur suiveur (5), dont la rotation est assurée par contact et/ou compression contre ledit rouleau inférieur (4) ou ledit support, ce rouleau supérieur (5) étant équipé de moyens de déplacement en translation selon une direction verticale pour régler, à la demande, son écartement vis-à-vis du rouleau inférieur (4),
**caractérisée par le fait que** lesdits moyens de déplacement comprennent une paire de moteurs, chacun d'entre eux étant solidaire, notamment via des éléments de transmission de mouvement (60, 62), d'une extrémité (52, 53) dudit rouleau, que chacun des moteurs (6) fonctionne indépendamment l'un de l'autre, et qu'elle comporte des moyens d'enregistrement de la position relative de chacune des extrémités (52, 53) dudit rouleau supérieur (5), lorsque celui est mis en simple contact contre le rouleau inférieur et que les pressions entre les rouleaux (4, 5) au voisinage de leurs extrémités respectives sont équilibrées.

2. Machine selon la revendication 1, **caractérisée par le fait que** :
- chaque extrémité (52, 53) du rouleau (5) est associée à un moyen d'enregistrement de position tel qu'un potentiomètre (64) apte à mesurer une valeur x₁, respectivement x₂, caractéristique de la position de cette extrémité lors d'un test de compression,
- et qu'elle comprend des moyens électroniques aptes à mesurer la valeur Δx, caractéristique de la différence entre x₁ et x₂, à l'enregistrer et à restituer cette différence d'écartement entre les rouleaux, quelques soient l'épaisseur, la largeur et le positionnement dudit document introduit entre eux.

3. Machine selon la revendication 1 ou 2, **caractérisée par le fait que** lesdits moteurs sont électriques.

4. Machine selon l'une des revendications 1 à 3, **caractérisée par le fait que** chacun desdits moteurs (6) possède un axe de sortie rotatif (60) en forme de vis sans fin, avec laquelle ladite extrémité (52, 53) coopère.

5. Machine selon l'une des revendications 1 à 4, **caractérisée par le fait qu'**elle comporte un seul et même organe pour la mise en route, respectivement l'arrêt des dits moteurs (6).

6. Machine selon l'une des revendications précédentes, **caractérisée par le fait que** lesdits moteurs (6) sont logés dans les montants (10, 11), à l'intérieur desquels sont guidées les extrémités de l'arbre (50) dudit rouleau supérieur (5).

7. Machine selon la revendication 6, **caractérisée par le fait que** chaque montant (10, 11) comporte un capot amovible (101, 111) autorisant l'accès auxdits moteurs (6).

## Patentansprüche

1. Maschine zum Aufkaschieren eines Substrats, insbesondere zur Plastifizierung eines Dokuments, durch Laminieren, die ein Gestell (1) zwischen den zwei Ständern (10, 11) umfasst, von dem sich zwei allgemein horizontale und rotierende Laminierwalzen (4, 5) erstecken, nämlich eine untere Antriebswalze (4) und eine obere Folgewalze (5), deren Rotation durch Kontakt und/oder Kompression gegen die untere Walze (4) oder das Substrat sichergestellt ist, wobei diese obere Walze (5) mit verschiebenden Verlagerungsmitteln gemäß einer vertikalen Richtung ausgestattet ist, um auf Anforderung ihren Abstand gegenüber der unteren Walze (4) einzustellen,
**dadurch gekennzeichnet, dass** die Verlagerungsmittel ein Paar von Motoren umfassen, wobei jeder von ihnen, insbesondere über Bewegungsübertragungselemente (60, 62), mit einem Ende (52, 53) der Walze fest verbunden ist, dass jeder der Motoren (6) unabhängig von dem anderen arbeitet und dass er Speichermittel der relativen Position jedes der Enden (52, 53) der oberen Walze (5) aufweist, wenn diese in einfachen Kontakt mit der unteren Walze versetzt wird und dass die Drücke zwischen den Walzen (4, 5) in der Nähe ihrer jeweiligen Enden ausgeglichen sind.

2. Maschine nach Anspruch 1, **dadurch gekennzeichnet, dass** :
- jedes Ende (52, 53) der Walze (5) mit einem Positionsregistrierungsmittel wie einem Potentiometer (64) verbunden ist, das imstande ist, bei einem Kompressionstest einen Wert X₁ beziehungsweise X₂ als Merkmal der Position dieses Endes zu messen,
- und dass sie elektronische Mittel umfasst, die imstande sind, den Wert Δx als Merkmal der Differenz zwischen X₁ und X₂ zu messen, ihn zu speichern und diese Abstandsdifferenz zwischen den Walzen auszugeben, unabhängig von der Dicke, der Breite und der Position des zwischen ihnen eingeführten Dokuments.

3. Maschine nach Anspruch 1 oder 2, **dadurch gekennzeichnet, dass** die Motoren elektrisch sind.

4. Maschine nach einem der Ansprüche 1 bis 3, **dadurch gekennzeichnet, dass** jeder der Motoren (6) eine rotierende Ausgangsachse (60) in Form einer Schnecke besitzt, mit der das Ende (52, 53) zusammenarbeitet.

5. Maschine nach einem der Ansprüche 1 bis 4, **dadurch gekennzeichnet, dass** sie ein einziges und selbes Organ für das Ingangsetzen beziehungsweise das Anhalten der Motoren (6) aufweist.

6. Maschine nach einem der vorangehenden Ansprüche, **dadurch gekennzeichnet, dass** die Motoren (6) in den Ständern (10, 11) untergebracht sind, in denen die Enden der Welle (50) der oberen Walze (5) geführt werden.

7. Maschine nach Anspruch 6, **dadurch gekennzeichnet, dass** jeder Ständer (10, 11) eine lösbare Abdeckung (101, 111) aufweist, die den Zugang zu den Motoren (6) gestattet.

## Claims

1. A machine for pasting a support, notably for plasticizing a document, by lamination, which comprises a chassis (1) between both struts (10, 11) from which extend two generally horizontal and lamination-rotary rollers (4, 5), i.e. a driving lower roller (4) and a follower upper roller (5), the rotation of which is ensured by contact and/or compression against said lower roller (4) or said support, this upper roller (5) being equipped with means for translational displacement along a vertical direction in order to adjust on demand its distance relatively to the lower roller (4),
**characterized by** the fact that said displacement means comprise a pair of motors, each of them being notably secured, via elements for transmitting movement (60, 62), to one end (52, 53) of said roller, that each of the motors (6) operates independently of each other, and that it includes means for recording the relative position of each of the ends (52, 53) of said upper roller (5), when the latter is put into simple contact against the lower roller and that the pressures between the rollers (4, 5) in the vicinity of their respective ends are balanced.

2. The machine according to claim 1, **characterized by** the fact that:
- each end (52, 53) of the roller (5) is associated with a means for recording position such as a potentiometer (64) able to measure a value x₁, respectively x₂, characteristic of the position of this end during a compression test,
- and in that it comprises electronic means able to measure the value Δx, characteristic of the difference between x₁ and x₂, to record and restore this separation distance between the rollers, regardless of the thickness, the width and the positioning of said document introduced between them.

3. The machine according to claim 1 or 2, **characterized by** the fact that said motors are electric motors.

4. The machine according to one of claims 1 to 3, **characterized by** the fact that each of said motors (6) have a rotary output shaft (60) with the shape of a worm screw, with which said end (52, 53) cooperates.

5. The machine according to one of claims 1 to 4, **characterized by** the fact that it includes a single and same member for starting, respectively stopping, said motors (6).

6. The machine according to one of the preceding claims, **characterized by** the fact that said motors (6) are accommodated in the struts (10, 11), inside which are guided the ends of the shaft (50) of said upper roller (5).

7. The machine according to claim 6, **characterized by** the fact that each upright (10, 11) includes a removable hood (101, 111) allowing access to said motors (6).
